# EUROPÄISCHE PATENTSCHRIFT

(11) **EP 3 115 605 B1**
(45) Veröffentlichungstag und Bekanntmachung des Hinweises auf die Patenterteilung: **18.04.2018**
(21) Anmeldenummer: 16001524.4
(22) Anmeldetag: 08.07.2016
(51) Int. Cl.: F04B 35/04, F04B 39/12, F04B 41/02, F03G 3/00

(54) **VORRICHTUNG UND VERFAHREN ZUM BEREITSTELLEN VON DRUCKLUFT**
DEVICE AND METHOD FOR GENERATING COMPRESSED AIR
DISPOSITIF ET PROCEDE DE PREPARATION D'AIR COMPRIME

(30) Priorität: 10.07.2015 DE 102015111256
(43) Veröffentlichungstag der Anmeldung: 11.01.2017
(73) Patentinhaber: Eichner, Dominik, 92364 Deining (DE)
(72) Erfinder: Holnberger, Johann, 92360 Mühlhausen (DE)
(74) Vertreter: Schneider, Andreas

(56) Entgegenhaltungen:
- WO-A1-2010/141079
- DE-A1-102013 111 543
- DE-U1- 20 020 508
- GB-A- 2 499 007

## Beschreibung

Die Erfindung betrifft eine Vorrichtung und ein Verfahren zum Bereitstellen von Druckluft.

Derzeit wird vielfach nach Lösungen gesucht, elektrische Energie auf einfache Art und Weise und mit hohem Wirkungsgrad zum Zweck ihrer Speicherung umzuwandeln. Dabei kommt auch eine Speicherung in Form von Druckluft in Betracht. Herkömmliche Lösungen zur Erzeugung von Druckluft erfordern oftmals aufwendige Vorrichtungen, die teuer in ihrer Herstellung sind.

Aus der Druckschrift DE 200 20 508 U1 ist ein Antrieb bekannt bei dem ein Arbeitskolben mit Hilfe seiner Gewichtskraft in einem mit Flüssigkeit gefluteten Rohr Druckluft erzeugt.

Weiterhin, ist aus der Druckschrift DE 10 2013 111 543 A1 ein Energiespeicher sowie ein Verfahren zur Herstellung eines Energiespeichers bekannt, bei dem temporäre Erzeugungsüberschüsse von über Sonne und Wind gewonnener elektrischer Energie mit Hilfe von in einer Einfassung beweglichen Kolben, welcher mit einer Stülpmembran gegenüber seiner Einfassung abgedichtet ist, gespeichert werden. Eine Aufgabe der Erfindung ist es daher, eine konstruktiv besonders einfache und mit geringem Aufwand herstellbare Lösung zur Bereitstellung von Druckluft anzugeben. Diese Aufgabe wird durch eine Vorrichtung nach Anspruch 1 bzw. ein Verfahren nach Anspruch 6 gelöst.

Die im Folgenden im Zusammenhang mit der erfindungsgemäßen Vorrichtung erläuterten Vorteile und Ausgestaltungen gelten sinngemäß auch für das erfindungsgemäße Verfahren und umgekehrt. Eine Grundidee der Erfindung besteht darin, zu speichernde elektrische Energie, beispielsweise überschüssigen Strom aus Windkraftanlagen, zu verwenden, um einen Kolben vergleichsweise großen Gewichts in eine Ausgangsstellung am oberen Ende einer senkrecht angeordneten Pump- oder Arbeitskammer zu bringen. Hierzu wird der Kolben aus einer unteren Position, zumeist in der Nähe des Bodens der Kammer, angehoben, beispielsweise unter Zuhilfenahme eines elektromotorischen Antriebs. Wird der in seiner Ausgangsstellung arretierte Kolben anschließend freigegeben, fällt dieser aufgrund seiner Gewichtskraft unter Wirkung des Erdschwerefeldes im Inneren der Arbeitskammer nach unten. Anders ausgedrückt schiebt sich der Kolben in die Kammer hinein, wobei der Kolben gegen die Kammerwände abdichtet. Dabei verdichtet der Kolben die sich im Inneren der Arbeitskammer befindende Luft und überträgt diese über eine luftdichte Verbindung in einen zweiten, als Speicherkammer dienenden Behälter. Das Verdichten der Luft erfolgt mit anderen Worten ausschließlich aufgrund der Gewichtskraft des Kolbens. Es gibt keinen zusätzlichen Antrieb des Kolbens, beispielsweise hydraulischer oder anderer Art. Der Kolben schiebt sich stets von selbst in die Kammer ein. Das Gewicht des Kolbens sowie die Dimensionierung der beteiligten Kammern, insbesondere deren Volumen, sind auf den gewünschten zu erreichenden Speicherdruck abgestimmt. Die Dimension der erfindungsgemäßen Vorrichtung kann in weitem Maße variiert werden. So sind Kolben mit einer Masse von vielen Tonnen bei einer Arbeitskammer mit einem Durchschnitt von wenigen Dezimetern denkbar.

Nach einem allein schwerkraftbedingten Pumphub wird der Kolben wieder in seine Ausgangsstellung bewegt, von wo aus er erneut fallengelassen werden kann. Ein entsprechendes Ventil an der Arbeitskammer, der Speicherkammer oder in der Verbindungsleitung stellt sicher, daß während des Rückhubs eine Rückströmung verdichteter Luft aus dem Speicherbehälter in die Arbeitskammer verhindert wird.

Nach beispielsweise einigen dutzend Hüben ist die Speicherkammer mit dem gewünschten Zieldruck befüllt. Es kann dann ein weiterer Speicherbehälter an die Arbeitskammer angeschlossen und das Erzeugen von Druckluft fortgesetzt werden. So können in Zeiten eines Energieüberschusses die Druckluftspeicher befüllt werden.

Wird dann elektrischer Strom benötigt, kann die gespeicherte Druckluft aus einer der Speicherkammern zum Antrieb eines Stromgenerators oder dergleichen verwendet werden. Hierzu wird der in der Ausgangsstellung der Speicherkammer arretierte Kolben gelöst. In Abhängigkeit von der benötigten Entnahmemenge bewegt sich der Kolben im Inneren der Speicherkammer nach unten und drückt die gespeicherte Druckluft, gleichmäßig über eine Ausgabeleitung, an deren Ende die Druckluft einem Verbraucher bereitgestellt wird. Im Gegensatz zu herkömmlichen Druckluftspeichern, bei denen eine Abgabe mit konstanten Druck überhaupt nicht oder nur mit sehr aufwendigen Mitteln gewährleistet werden kann, wird im vorliegenden Fall der bereitzustellende Arbeitsdruck bis zum Schluß garantiert. Erst wenn der Druckluftspeicher vollständig geleert ist, der Kolben also auf dem Boden der Speicherkammer liegt, verringert sich der bereitgestellte Druck schlagartig auf Null.

Die vorliegende Erfindung kann auf besonders vorteilhafte Weise mit einer Vorrichtung und einem Verfahren zur Erzeugung von elektrischem Strom kombiniert werden.

Die Speicherung von überschüssiger Energie, gewonnen beispielsweise aus Windkraftanlagen, ist bisher nicht zufriedenstellend gelöst. Das Gleiche gilt für eine möglichst verlustarme Erzeugung von elektrischem Strom aus gespeicherter Energie. Um eine Technik zur möglichst verlustfreien Erzeugung von elektrischem Strom aufzuzeigen, ist es eine weitere Idee der Erfindung, eine Vorrichtung zur Erzeugung von elektrischem Strom mit Druckluft aus einem Druckluftspeicher zu betreiben. Auf diese Weise läßt sich die Stromerzeugung vergleichsweise verlustfrei durchführen. Dabei wird die Generatorwelle eines elektrischen Drehgenerators mit Hilfe einer Rotationseinrichtung angetrieben. In einer Ausführungsform der Erfindung erfolgt die Drehung der Rotationseinrichtung um ihre Drehachse, zumindest zeitweise, unter Verwendung von Druckluft, insbesondere dadurch, daß wenigstens ein Antriebselement der Rotationseinrichtung mit einem druckluftverursachten Antriebsmoment beaufschlagt wird.

Eine weitere Idee ist es, an einer Antriebswelle dieser Rotationseinrichtung eine Unwuchtmasse vorzusehen. Diese Unwuchtmasse verursacht aufgrund der Fliehkraft eine kreisförmige mechanische Schwingung, die sich mit der Drehbewegung der Antriebswelle derart überlagert, daß sie in einer Ausführungsform der Erfindung die Drehung der Rotationseinrichtung unterstützt. Diese zusätzliche Bewegungsenergie erhöht den Wirkungsgrad der Stromerzeugungsvorrichtung.

Eine weitere Idee besteht darin, die von der Unwuchtmasse hervorgerufene Pendelbewegung der Antriebswelle zu nutzen, um den Wirkungsgrad der Stromerzeugungsvorrichtung weiter zu erhöhen. Dies ist gemäß einer Ausführungsform der Erfindung insbesondere dann möglich, wenn die Antriebswelle als lineares inverses Pendel ausgeführt ist und der Stellungswechsel der Antriebswelle durch zyklische Beaufschlagung mit einem Bewegungsimpuls in Richtung der jeweils anderen Stellung unterstützt wird.

In einer anderen Ausführungsform der Erfindung ist nicht das Antriebselement, sondern die kreisförmig schwingende Unwuchtmasse ursächlich für die Drehbewegung der Generatorwelle und damit die Drehung der Rotationseinrichtung. In diesem Fall wird das wenigstens eine Antriebselement der Rotationseinrichtung zumindest zeitweise mit einem druckluftverursachten Antriebsmoment beaufschlagt, um den Stellungswechsel der in diesem Fall vorzugsweise als inverses Pendel ausgeführten Antriebswelle zu unterstützen. Vorteilhafterweise ebenfalls unterstützend für den Stellungswechsel ist dann die Verwendung einer Anzahl an dem Antriebselement angreifender Federelemente.

Die vorgeschlagene Technik eines "Druckluftantriebs" gewährleistet einen außerordentlich hohen Wirkungsgrad. Die Stromerzeugungsvorrichtung ist preiswert herstellbar und in weiten Grenzen skalierbar. Sie arbeitet bei Verwendung hochwertiger Komponenten nahezu verschleißfrei und kann somit dauerhaft oder zumindest über sehr lange Zeiträume ohne Wartung betrieben werden.

Ein Ausführungsbeispiel der Erfindung sowie vorteilhafte Ausführungsfcrmen werden nachfolgend anhand der Zeichnungen näher erläutert. Hierbei zeigen:
- Fig. 1: eine Darstellung einer erfindungsgemäßen Vorrichtung zur Bereitstellung vcn Druckluft,
- Fig. 2: ein Detail der Vorrichtung aus Fig. 1,
- Fig. 3: eine perspektivische Darstellung einzelner Komponenten einer Stromerzeugungsvorrichtung (erste Ausführungsform),
- Fig. 4: eine Schnittdarstellung der Stromerzeugungsvorrichtung (erste Ausführungsform),
- Fig. 5: eine Draufsicht auf ein Antriebselement (erste Ausführungsform),
- Fig. 6: eine Draufsicht auf die in der Führungsplatte geführte Antriebswelle (erste Ausführungsform),
- Fig. 7: eine perspektivische Darstellung einzelner Komponenten der erfindungsgemäßen Stromerzeugungsvorrichtung (zweite Ausführungsform),
- Fig. 8: eine Schnittdarstellung der Stromerzeugungsvorrichtung (zweite Ausführungsform),
- Fig. 9: eine Draufsicht auf ein Antriebselement (zweite Ausführungsform) während des Betriebs,
- Fig. 10: eine Draufsicht auf ein Antriebselement (zweite Ausführungsform) in Ruhestellung.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Die Vorrichtung 1 zum Bereitstellen von Druckluft umfaßt in dem hier dargestellten Beispiel drei Kammern 2, 3, 4, wobei die Kammern 2, 3, 4 unterirdisch ausgeführt sind, also unter der Erdoberfläche 5 angeordnet sind. Auf besonders preiswerte Art und Weise können die Kammern 2, 3, 4 dann durch Bohrungen hergestellt werden. Nach dem Erstellen der Bohrlöcher können zur Bildung der Kammern 2, 3, 4 endseitig mit einem Boden verschlossene Rohre 6 des gewünschten Durchmessers in die Bohrungen eingeführt. Somit kann auf einfache Art und Weise eine Fallhöhe 7 von mehreren dutzend Metern realisiert werden.

Bei den Kammern 2, 3, 4 handelt es sich um langgestreckte Behälter, deren Durchmesser einem Bruchteil ihrer Länge entspricht. Jede Kammer 2, 3, 4 weist einen konstanten Querschnitt auf. Die Längsachsen 8 der Kammer 2, 3, 4 verlaufen senkrecht. Die Kammern 2, 3, 4 sind als gerade Zylinder ausgeführt, wobei es sich vorzugsweise um Kreiszylinder handelt. Es sind aber auch Zylinder mit anderen Grundflächen möglich, beispielsweise mit eckigen Grundflächen (gerade Prismen), wobei sich besonders solche mit rechteckiger Grundfläche als vorteilhaft erwiesen haben (Quader).

In den Kammern 2, 3, 4 sind Kolben 9 in Längsrichtung 11 verfahrbar angebracht. Die Kolben 9 entsprechen in ihrer Form dem Querschnitt der Kammer 2, 3, 4 und dichten dabei gegen die Kammerwände 12 ab. Beispielsweise weisen die Kolben 9 die Form von Kreiszylindern oder Quadern auf. Die Abdichtung der Kolben 9 gegen die Kammerwände 12 erfolgt vorzugsweise mittels Manschetten 13 oder andere Dichtungsmitteln, welche an der Umfangsfläche der Kolben 9 angebracht sind und vorzugsweise dauerhaft, also sowohl während eines Einschiebens des Kolbens 9 in die Kammer 2, 3, 4 als auch während des Rückhubs, an der Kammerwand 12 anliegen.

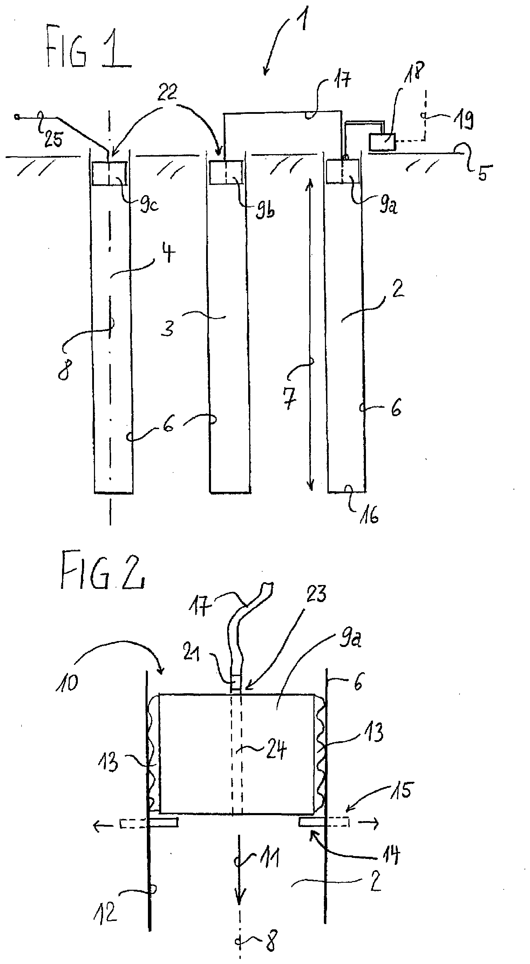

Bei der ersten Kammer 2 handelt es sich um eine Pump- oder Arbeitskammer. Ein Kolben 9a ist in seiner Ausgangsstellung 10 am oberen Ende 14 der Kammer 2 arretiert. Von dort aus schiebt sich der Kolben 9a in die Kammer 2 ein, nachdem eine Arretierung gelöst ist. Eine einfache Arretierungseinrichtung 15 ist in Fig. 2 beispielhaft dargestellt. Der Kolben 9a bewegt sich mit anderen Worten von selbst aufgrund der Wirkung der Schwerkraft nach unten in Richtung des Kammerbodens 16.

Durch das Einschieben des in dieser Kammer 2 angeordneten Kolbens 9a wird Luft in der Arbeitskammer 2 verdichtet und über eine Verbindungsleitung 17 in eine als Speicherkammer dienende zweite Kammer 3 übertragen. Dabei schiebt sich der Kolben 9a, ausgehend von seiner Ausgangsstellung 10 im Inneren der ersten Kammer 2, im wesentlichen ausschließlich aufgrund seiner Gewichtskraft in die erste Kammer 2 ein, sobald seine Arretierung gelöst ist. Die auf diese Weise erzeugte Druckluft wird in der zweiten Kammer 3 gespeichert. Als Arbeitsmedium dient vorzugsweise Luft. Es kann ebensogut aber auch ein anderes geeignetes, gut komprimierbares Gas oder Gasgemisch als Luft im Sinne der Erfindung dienen.

Zur Übertragung der erzeugten Druckluft in die zweite Kammer 3 ist diese mit der ersten Kammer 2 über die Verbindungsleitung 17 luftdicht verbunden. Die luftdichte Verbindung zwischen den Kammern 2, 3 kann als Verrohrung ausgeführt sein, wobei darunter auch die Verwendung elastischen Schlauchmaterials usw. zu verstehen ist.

Das sich an einen solchen Pumphub anschließende Zurückholen des Kolbens 9a von seiner eingeschobenen Stellung am Kammerboden 16 in seine Ausgangsstellung, der sogenannte Rückhub, erfolgt unter Zuhilfenahme einer Rückhubeinrichtung 18 zum Anheben des Kolbens 9a. Die Rückhubeinrichtung 18 umfaßt zu diesem Zweck beispielsweise eine Winde. Die Rückhubeinrichtung 18 wird unter Verwendung elektrischer Energie betrieben, wobei es sich dabei vorzugsweise um zu speichernde, überschüssige Energie handelt, wie beispielsweise elektrischen Strom aus Windkraftanlagen. Zu diesem Zweck ist die Rückhubeinrichtung 18 über eine Anschlußleitung 19 mit einer Windkraftanlage oder einer Stromversorgungseinrichtung verbunden. Während der Rückbewegung des Kolbens 9a in seine Ausgangsstellung 10 wird eine Rückströmung verdichteter Luft aus der zweiten Kammer 3 in die erste Kammer 2 durch ein Ventil 21 verhindert.

Das Ventil 21, welches eine Rückströmung verdichteter Luft aus der Speicherkammer 3 in die Arbeitskammer 2 verhindern soll, kann am Einlaß 22 der Speicherkammer 3 oder am Auslaß 23 der Arbeitskammer 2 oder aber in der Verbindungsleitung 17 vorgesehen sein. Der Auslaß 23 der Arbeitskammer 2, an dem die Verbindungsleitung 17 zu dem Speicherbehälter 3 angebracht ist, kann sich am Boden 16 der Kammer 2 befinden. Sind die Kammern 2, 3, 4 jedoch, wie im vorliegenden Beispielfall, im Erdinneren angeordnet, ist dies nicht möglich. Der Auslaß 23 der Arbeitskammer 2 sowie der Einlaß 22 der Speicherkammer 3, 4 befinden sich dann im jeweiligen Kolben 9. Hierzu sind in den Kolben 9 entsprechende Durchlaßöffnungen 24 vorgesehen, die sich durch den Kolben 9 hindurch von dem Kammerinneren nach außen erstrecken. Der Auslaß 23 bzw. der Einlaß 22 bewegen sich somit während jeder Hubbewegung mit dem jeweiligen Kolben 9 mit. Die luftdichte Verbindungsleitung 17, welche die Arbeitskammer 2 mit einer Speicherkammer 3, 4 verbindet, ist dann vorzugsweise als flexibles, aufrollbares Schlauchelement ausgeführt.

Ist der Kolben 9 dauerhaft gegen die Kammerwand 12 abgedichtet, also nicht nur während des Einschiebens, sondern auch während des Rückhubs, dann muß während des Rückhubs sichergestellt sein, daß von außen eine neue Menge Luft in die Arbeitskammer 2 gelangen kann. Hierzu ist vorzugsweise ein an geeigneter Stelle angebrachtes zweites Ventil vorgesehen, das während des Rückhubs geöffnet ist. Diese Funktionalität kann auch von dem ersten Ventil 21, welches die Rückströmung aus der Speicherkammer 3, 4 verhindern soll, übernommen werden, sofern dieses geeignet ausgeführt ist und gleichzeitig über eine Sperr- und eine Einlaßfunktion verfügt.

Der Kolben 9a kann zwischen den einzelnen Pumphüben in seiner Ausgangsstellung 10 arretiert werden. Ein solches Arretieren des Kolbens 9a kann aber auch nur ein einfaches Halten in der Ausgangsstellung 10 sein. Es ist nicht zwingend eine Arretierungseinrichtung 15 erforderlich, solange eine geeignete Haltevorrichtung zum zumindest zeitweisen Halten des Kolbens vorhanden ist. Vorzugsweise dient jedoch eine Arretierungseinrichtung 15 zur dauerhaften Arretierung der Kolbens 9 in der Ausgangsstellung 10, zumindest bei des Kolben 9b, 9c der Speicherkammern 3, 4.

Nach dem Befüllen der zweiten Kammer 3 wird die Verbindungsleitung 17 von dem Einlaß 22 der zweiten Kammer 3 getrennt und an den Einlaß 22 der dritten Kammer 4 angeschlossen, bei der es sich ebenfalls um eine Speicherkammer handelt. Anschließend wird auf gleiche Weise die dritte Kammer 4 mit Druckluft befüllt.

Wird Druckluft benötigt, so wird sie von der zweiten Kammer 3 oder der dritten Kammer 4 bereitgestellt, indem eine Druckluftzuführung 25 an die entsprechende Kammer 3, 4 angeschlossen wird, mit der Druckluft an einen Verbraucher abgegeben werden kann. Erneut erfolgt die Bewegung des Kolbens 9b, 9c ausgehend von seiner Ausgangsstellung 10 in der Kammer 3, 4 in Richtung des Erdschwerefeldes, wobei der Kolben 9b, 9c ebenfalls im wesentlichen ausschließlich aufgrund seiner Gewichtskraft in die Kammer 3, 4 eingeschoben wird. Auch dieser Kolben 9b, 9c wird durch die Rückhubeinrichtung 18 in seine Ausgangsstellung angehoben. Durch ein Einschieben des in der Speicherkammer 3, 4 angeordneten Kolbens 9b, 9c in die Kammer 3, 4 wird die Druckluft mit einem konstanten Abgabedruck bereitgestellt. Ein typischer Arbeitsdruck, der von einer befüllten Speicherkammer 3, 4 bereitgestellt werden kann, beträgt 10 bar.

In einer alternativen Ausführungsvariante ist die Arbeitskammer 2 mit mehreren Speicherkammern 3, 4 gleichzeitig verbunden, so daß diese bei jedem Hub des Kolbens 9a in der Arbeitskammer 2 gleichzeitig mit Druckluft befüllt werden. Besonders vorteilhaft ist jedoch die zuvor beschriebene Variante, bei der die Speicherkammern 3, 4 einzeln und nacheinander befüllt werden, da dann gewährleistet ist, daß eine Abgabe von Druckluft immer aus einem bestmöglich gefüllten Speicherbehälter 3, 4 möglich ist.

Die Rückhubeinrichtung 18 zum Zurückbewegen des Kolbens 9 in seine Ausgangsstellung 10 muß nicht für jede Kammer 2, 3, 4 vorgesehen sein. So kann beispielsweise eine einzige Rückhubeinrichtung 18 ausreichend sein, wenn diese während des Befüllens der Speicherkammern 3, 4 an der Arbeitskammer 2 montiert ist, um den Kolben 9a der Arbeitskammer 2 stets wieder in seiner Ausgangsstellung 10 zu heben. Bei Bedarf kann dann diese Rückhubeinrichtung 18 demontiert und an einer der Speicherkammern 3, 4 erneut montiert werden, um den Kolben 9b, 9c der Speicherkammer 3, 4 nach dem Bereitstellen der gespeicherten Druckluft an einen Abnehmer wieder in seine Ausgangsstellung 10 zu heben, um somit die Speicherkammer 3, 4 erneut befüllbar zu machen.

Anstelle von in der Rückhubeinrichtung 18 verwendeten Elektromotoren, die mit überschüssigem Strom betrieben werden, kann das Anheben der Kolben 9 alternativ auch durch Muskelkraft erfolgen, beispielsweise mit Hilfe von Pferden in einem Göpelwerk oder dergleichen.

In einer nicht im Detail abgebildeten, vorteilhaften Ausführungsform der Erfindung ist die Gewichtskraft des in der Pump- oder Arbeitskammer 2 arbeitenden Kolbens 9a veränderbar. Hierzu umfaßt der Kolben 9a beispielsweise eine Mehrzahl das Gewicht des Kolbens 9a nicht unwesentlich beeinflussender Kolbenelemente, die bedarfsweise von dem Kolben 9a entfernt oder zu dem Kolben 9a hinzugefügt werden können. Vorzugsweise wird die Gewichtskraft des Kolben 9a vor jedem Hubvorgang oder nach einer bestimmten Anzahl von Hubvorgängen der zum Verdichten benötigten Druckkraft angepaßt. Es ist also nicht zwingend erforderlich, daß der Kolben 9a bei jedem Einschieben in die Kammer 2 sein maximales Gewicht aufweist. Bei reduziertem Gewicht muß auch die Rückhubeinrichtung 18 beim Anheben des Kolbens 9a in seine Ausgangsstellung 10 weniger Arbeit verrichten.

In Verbindung mit der eingangs genannten weiteren Idee läßt sich ein Gesamtsystem aufstellen, umfassend eine Vorrichtung 1 zum Bereitstellen von Druckluft und eine mit der Vorrichtung 1 zusammenwirkende Vorrichtung 101, 201 zur Erzeugung von elektrischem Strom.

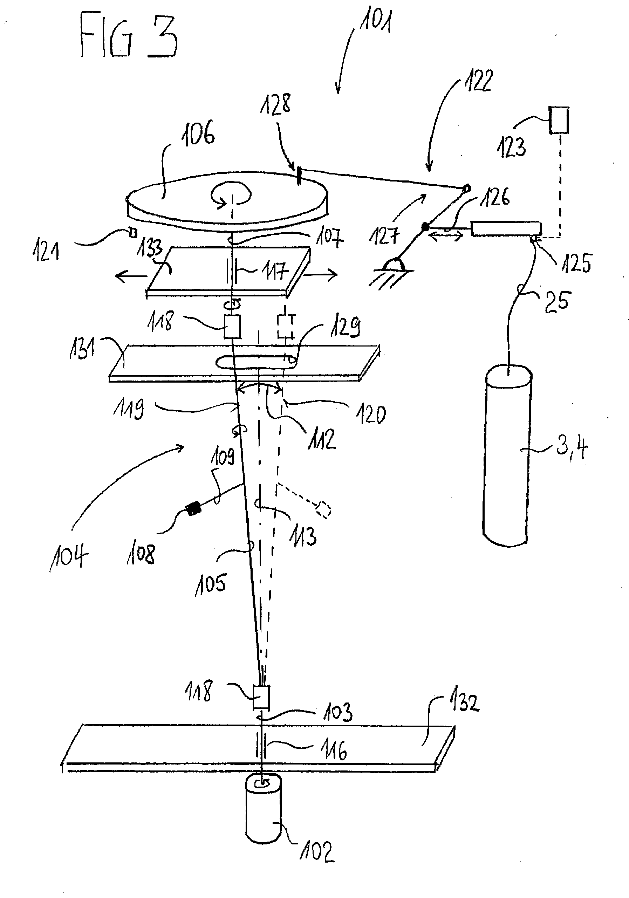

In den Fig. 3 bis 6 ist eine erste Ausführungsform der Stromerzeugungsvorrichtung dargestellt.

Wie in Fig. 3 skizziert, umfaßt die Vorrichtung 101 zur Erzeugung von elektrischem Strom einen elektrischen Drehgenerator 102, der eine Generatorwelle 103 aufweist. Die Vorrichtung 101 umfaßt weiter eine Rotationseinrichtung 104 zum Antreiben der Generatorwelle 103. Die Rotationseinrichtung 104 weist eine Antriebswelle 105 und ein Antriebselement 106 auf. Als Antriebselement 106 dient dabei eine vorzugsweise scheibenförmige Schwungmasse.

Die Antriebswelle 105 steht sowohl mit der Generatorwelle 103 des Drehgenerators 102 als auch mit dem Antriebselement 106 in Wirkverbindung zur Übertragung von Drehbewegungen. Hierzu ist die Antriebswelle 105 mit ihrem einen Ende mit der Generatorwelle 103 drehfest verbunden. Mit ihrem anderen Ende ist die Antriebswelle 105 mit einer Antriebsprimärwelle 107 drehfest verbunden. Die Antriebsprimärwelle 107 ist der mit dem Antriebselement 106 unmittelbar verbundene, sich mit dem Antriebselement 106 mitdrehende Teil des Wellenstrangs.

Weiterhin umfaßt die Rotationseinrichtung 104 eine Unwuchtmasse 108. Die Unwuchtmasse 108 ist an einem mit der Antriebswelle 105 fest verbundenen Hebelarm 109 angebracht, der nach Art eines Auslegers die Unwuchtmasse 108 beabstandet von der Drehachse 111 der Antriebswelle 105 trägt.

Die Rotationseinrichtung 104 ist derart ausgebildet, daß Teile der Rotationseinrichtung 104, insbesondere die Antriebswelle 105, gegebenenfalls gemeinsam mit der Antriebsprimärwelle 107 und dem Antriebselement 106, eine von der Unwuchtmasse 108 hervorgerufene Pendelbewegung 112 vollführen kann, ohne die Wirkverbindung zu der Generatorwelle 103 und zu dem Antriebselement 106 zu verlieren.

Der sich von der Antriebswelle 105 und damit der zentralen Drehachse 111 radial nach außen erstreckende und somit von der Antriebswelle 105 abstehende Hebelarm 109 rotiert mit der an seinem Freiende angebrachten Unwuchtmasse 108 im Betrieb um die Antriebswelle 105. Je weiter entfernt die Unwuchtmasse 108 dabei von der Antriebswelle 105 ist, desto größer sind der wirksame Hebelarm und das entstehende Unwuchtmoment. Im Ergebnis liegt der Masseschwerpunkt der Antriebswelle 105 und damit der gesamten Rotationseinrichtung 104 exzentrisch zur Drehachse 111 der Antriebswelle 105.

Abhängig von der konkreten konstruktiven Ausführung der Rotationseinrichtung 105, insbesondere der Antriebswelle 105, der Länge des Hebelarmes 109 und der Unwuchtmasse 108, wird eine Schrägstellung der Antriebswelle 105 zur Senkrechten 113, d.h. zur Richtung der Erdschwerefeldes, erreicht.

Aufgrund der Schrägstellung der Antriebswelle 105 und dem Einfluß der Unwuchtmasse 108 erfährt die Antriebswelle 105 und damit die Rotationseinrichtung 104 eine Eigendynamik. Nach der Bereitstellung eines initialen Antriebsimpulses über das Antriebselement 106 erfolgt eine Drehung 114 der Rotationseinrichtung 104 ohne äußere Energiezufuhr, verursacht allein durch Schwer- und Fliehkräfte, um mindestens eine halbe Umdrehung. Je schneller sich die Antriebswelle 105 dreht, um so mehr Eigendynamik entwickelt das System und um so weniger Druckluft wird benötigt, um einen dauerhaften Betrieb mit der gewünschten Arbeitsdrehzahl aufrecht zu erhalten.

Sowohl die an dem "Festende" der Antriebswelle 105 angeordnete Generatorwelle 103 des Drehgeneratots 102 als auch die an dem pendelnden "Freiende" der Antriebswelle 10 angeordnete, unmittelbar mit dem Antriebselement 106 verbundene Antriebsprimärwelle 107 sind vorzugsweise senkrecht angeordnet und in geeigneten Lagern 116, 117 gelagert, wobei das Lager 116 der Generatorwelle 103 feststehend ist. Die Schrägstellung betrifft somit allein die zwischen der Generatorwelle 103 und der Antriebsprimärwelle 107 angeordnete Antriebswelle 105, die auch den Hebelarm 109 mit der Unwuchtmasse 108 aufweist. Diese Antriebswelle 105 ist an ihren beiden Anschlußenden mit Verbindungselementen 118 für die Generatorwelle 103 bzw. die Antriebsprimärwelle 107 versehen, die eine wechselnde Stellung der Antriebswelle 105, nämlich den Wechsel zwischen zwei Pendelstellungen 119, 120 erlauben. Zu diesem Zweck sind die Verbindungselemente 118 vorzugsweise nach Art von Kardangelenken ausgeführt.

Die Vorrichtung 101 umfaßt darüber hinaus eine an einem Druckluftspeicher 3, 4 anschließbare Druckluftzuführung 25. Für den Betrieb einer typischen Stromerzeugungsvorrichtung 101, beispielsweise für ein Einfamilienhaus, ist dabei ein von dem Druckluftspeicher 3, 4 zur Verfügung gestellter konstanter Arbeitsdruck von 10 bar ausreichend.

Das Antriebselement 106 steht mit der Druckluftzuführung 25 in Wirkverbindung dergestalt, daß es mittels aus dem Druckluftspeicher 3, 4 entnommener Druckluft mit einem Antriebsmoment beaufschlagbar ist. Hierzu wird das Antriebselement 106 mit einem druckluftbetriebenen Schubgestänge 122 angetrieben.

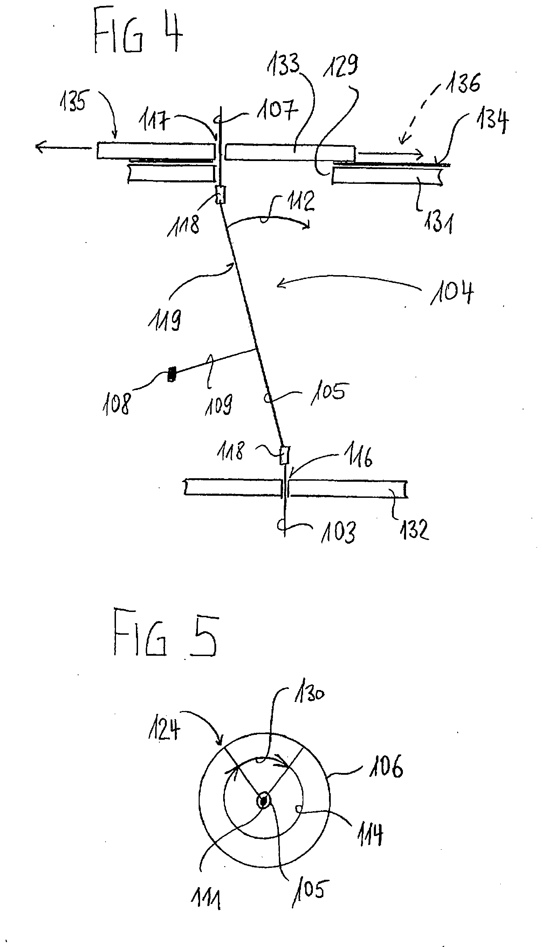

Zum Antrieb des Antriebselements 106 mittels Druckluft umfaßt die Vorrichtung 101 eine die Druckluftzufuhr des Schubgestänges 122 in Abhängigkeit von der Position des Antriebselements 106 beeinflußbare Kontrolleinheit 123. Immer dann, wenn der durch die Unwuchtmasse 108 hervorgerufene Bewegungsanteil der Rotationseinrichtung 104 einen Grenzwert unterschreitet, sich die Drehung der Antriebswelle 105 der Rotationseinrichtung 104 also verlangsamt, nämlich insbesondere dann, wenn die durch die Unwucht hervorgerufene Drehbewegung sich ihrem "Totpunkt" oder "Nullpunkt" 124 nähert, siehe Fig. 5, wird das Antriebselement 106 über das Schubgestänge 122 mit einem entsprechend dosierten Antriebsmoment beaufschlagt.

Zu diesem Zweck wird das Schubgestänge 122 oder eine andere, die Wirkverbindung zwischen Druckluftzufuhr 25 und Antriebselement 106 gewährleistende Antriebsverbindurg, mit Hilfe der Druckluft bewegt. Anders ausgedrückt wird zyklisch Energie zugeführt, um eine möglichst konstante Drehzahl des Antriebselements 106 und damit des Wellenstrangs, einschließlich der Generatorwelle 103 des Drehgenerators 102 zu gewährleisten. Die Kontrolleinheit 123 steuert dabei über einen geeigneten von dem Antriebselement 106 betätigbaren Schalter 121 ein Druckluftventil 125 in der Druckluftzuführung 25.

Das Schubgestänge 122 ist dabei beispielsweise nach Art eines Kolbentriebs ausgeführt und weist die üblichen Elemente, wie Kolben 126, Pleuel 127 und Kurbelzapfen 128 auf. Der Kurbelzapfen 128 ist dabei nahe des Umfangs des Antriebselements 106 befestigt.

Das Schubgestänge 122 wird allein durch die bereitgestellte und zu geeigneten Zeitpunkten dosiert zugeführte Druckluft betrieben. Genauer gesagt dient die Druckluft bei geöffnetem Ventil 125 dazu, den Kolben 126 zu füllen, der über das Pleuel 127 und den Kurbelzapfen 128 einen Drehimpuls auf das Antriebselement 106 gibt. Die Ventilsteuerung erfolgt dabei in Abhängigkeit von der Position des Antriebselements 106 und somit in Abhängigkeit von der Drehstellung der Antriebswelle 105.

Ist also der "Totpunkt" 124 überwunden, so daß die durch die Unwuchtmasse 108 hervorgerufene Bewegung wieder den Hauptteil der Antriebsenergie für die Antriebswelle 105 liefert, wird der Schalter 121, der beispielsweise durch einen mechanischen Kontakt an dem Antriebselement 106, eine Lichtschranke oder dergleichen auslösbar ist, wieder geschlossen, so daß die Druckluftzufuhr endet und der Kolben 126 durch die weitere Drehung 130 des Antriebselements 106 wieder in seine Ausgangsposition geschoben wird.

Es erfolgt mit anderen Worten keine dauerhafte, kontinuierliche Beaufschlagung des Antriebselements 106 mit einem druckluftbasierenden Antriebsmoment. Statt dessen erfolgt die Energiezufuhr und damit eine druckluftunterstütze Drehung 130 in zeitlichen Abständen, d.h. zyklisch, wobei die Zeitabstände von der jeweiligen aktuellen Drehzahl der Rotationseinrichtung 104 abhängig sind.

Anstelle des Schubgestänges 122 kann eine beliebige andere geeignete Übertragungseinrichtung verwendet werden, beispielsweise auch unter Verwendung eines zusätzlichen Getriebes zum Erreichen einer höheren Drehzahl des Antriebselements 106. Durch die Verwendung eines Übersetzungsgetriebes kann der Wirkungsgrad der Vorrichtung 101 weiter erhöht werden.

Die Rotationseinrichtung 104 ist nach Art eines linearen inversen Pendels ausgeführt, so daß der obere Teil des Wellenstrangs, einschließlich des "Freiendes" der Antriebswelle 10, in zwei Richtungen beweglich ist. Während einer Drehung um die zentrale Drehachse 111 der Vorrichtung 101 kippt somit die Antriebswelle 105 einschließlich der Antriebsprimärwelle 107 und des Antriebselements 106, von einer Pendelstellung 119 in die andere Pendelstellung 120.

Die Antriebswelle 105 ist vorzugsweise an ihrem oberen, freien "Pendelende" in einem Langloch 129 oder einer anderen geeigneten Führung der Vorrichtung 101 geführt. Diese Führung dient dazu, definierte Pendelstellungen 119, 120 der Antriebswelle 105 zu erhalten. Diese Führungsaufnahme 129 wird vorzugsweise durch eine Öffnung in einer Führungsplatte 131 gebildet, die ein Teil des Trägerrahmens der Vorrichtung 101 ist. Der Trägerrahmen, welcher die Vorrichtung 101 trägt, umfaßt darüber hinaus eine mit der Führungsplatte 131 fest verbundene Grundplatte 132, in der das Festlager 116 für die Generatorwelle 103 angebracht ist.

Die Antriebsprimärwelle 107 ist, ähnlich wie die Generatorwelle 103, in einem zweiten Lager 117 der Rotationseinrichtung 104 gelagert. Beide Lager 116, 117 sind vorzugsweise als reibungsarme Lagerstellen ausgeführt. Im Gegensatz zu dem feststehenden Lager 116 der Generatorwelle 103 ist das Lager 117 der Antriebsprimärwelle 107 relativ zu dem Trägerrahmen beweglich ausgeführt.

Das Lager 117 der Antriebsprimärwelle 107 befindet sich zu diesem Zweck in einem Schieber 133. Dieser Schieber 133 ist, wie in Fig. 4 illustriert, an der das Langloch 129 aufweisenden Führungsplatte 131 mit Hilfe geeigneter Führungsmittel 134, beispielsweise Schienen, linear geführt und dabei von einer ersten Lagerposition 135, wie in Fig. 4 illustriert, in eine zweite Lagerposition 136 verschiebbar, wobei die erste Lagerposition 134 der ersten Pendelstellung 119 der Antriebswelle 105 und die zweite Lagerposition 135 der zweiten Pendelstellung 120 der Antriebswelle 105 entsprechen. Dieser Schieber 133 dient als Betätigungselement zur Unterstützung des linearen Stellungswechsels der Antriebswelle 105 von ihrer ersten Pendelstellung 119 in ihre zweite Pendelstellung 120 durch Übertragen eines linearen Bewegungsimpulses auf die Antriebswelle 105 in Richtung der Pendelbewegung.

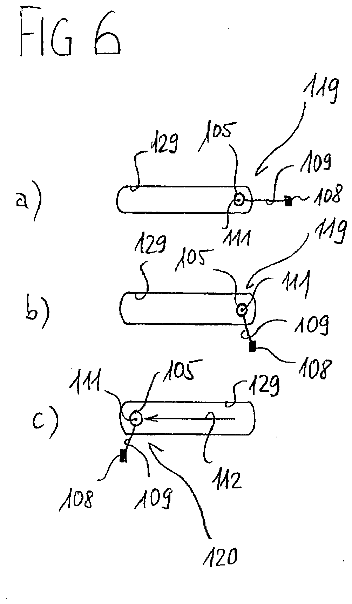

Der Stellungswechsel, also das Hin- und Her-Kippen der Antriebswelle 105 zwischen ihren Pendelstellungen 119, 120, wird mit Hilfe des Schiebers 133 auf einer Art und Weise unterstützt, daß sich die Rotationseinrichtung 104 über den Kipp-Punkt der Antriebswelle 105 besonders einfach hinwegbewegt, indem der Antriebswelle 105 beim Durchlaufen dieser Stellung ein entsprechendes (geringes) Bewegungsmoment in Richtung der Pendelbewegung aufgeprägt wird. Wie in Fig. 6 angegeben, erfolgt das Verschieben des Schiebers 133 im wesentlichen zeitgleich mit dem Zeitpunkt der "natürlichen" Kippbewegung, nämlich sobald die Bewegungsrichtung der Unwuchtmasse 108 in Längsrichtung des Langlochs 129 weist. Fig. 6b zeigt die Stellung der Antriebswelle 105 und des Hebelarmes 109 kurz vor dem Kipp-Punkt. Diese Kippbewegung würde die Rotationseinrichtung 104, ausreichende kinetische Energie vorausgesetzt, zwar auch von selbst ohne Einfluß von außen vollführen. Durch ein Verschieben des Betätigungselements 133 wird jedoch der Kippvorgang unterstützt. Durch die Energiezufuhr wird der während des Kippvorgangs stattfindende Energieverlust der der Rotationseinrichtung 104 innewohnenden Bewegungsenergie verringert. Zugleich trägt ein solcherart unterstützter Kippvorgang dazu bei, die gewünschte Arbeitsdrehzahl trotz des Vorhandenseins der Unwuchtmasse 108 beizubehalten.

Das Betätigungselement 133, welches zur Unterstützung des Stellungswechsels des Pendelendes im "Kipp-Punkt" dient, wird vorzugsweise, ebenso wie das Antriebselement 106 beim Durchlaufen des "Totpunktes" 124, über ein Schubgestänge oder eine andere geeignete Antriebseinrichtung (nicht abgebildet) mit Druckluft aus der Druckluftzuführung 25 betrieben. Hierzu ist, ähnlich wie bei der bereits beschriebenen Kontrolleinheit 123, eine das Betätigungselement 133 bzw. das entsprechende Schubgestänge kontrollierende Steuereinheit (nicht abgebildet) vorgesehen, wobei die Steuereinheit die Druckluftzufuhr in Abhängigkeit von der Position der Unwuchtmasse 108 und damit in Abhängigkeit von der Drehstellung der Rotationseinrichtung 104, genauer gesagt von der Drehstellung der Antriebswelle 105 der Rotationseinrichtung 104, durch eine entsprechende Ansteuerung eines Druckluftventils (nicht abgebildet) kontrolliert.

Ein Kippen der Antriebswelle 105 und damit ein Stellungswechsel findet jede halbe Umdrehung statt. Gleiches gilt somit ebenfalls für die Betätigung des Schiebers 133 zur druckluftbetriebenen Unterstützung des Kippvorganges. Im Gegensatz dazu findet die druckluftbetriebene Unterstützung des Antriebselements 106 beim Durchlaufen des "Totpunktes" 124 nur einmal je Umdrehung statt.

Zur Verringerung des Luftwiderstands ist es denkbar, die Vorrichtung 101 in einem abgeschlossenen Betriebsraum zu betreiben, der zu diesem Zweck evakuiert wird. Ein solcher Betrieb im Vakuum erhöht den Wirkungsgrad der Vorrichtung 101 weiter.

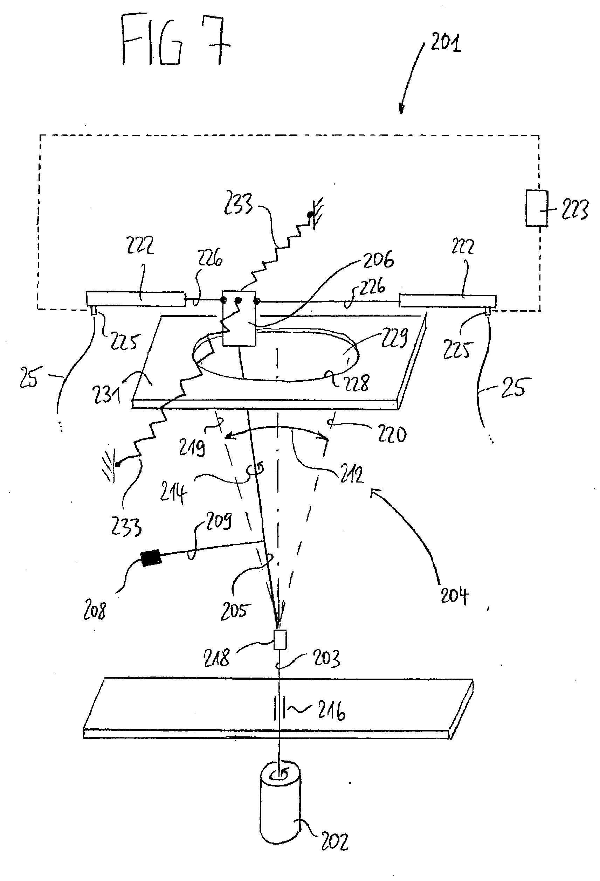

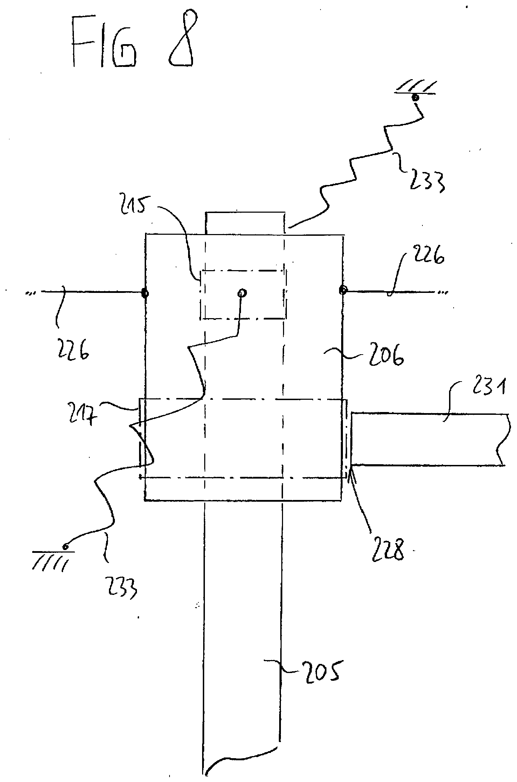

In den Fig. 7 bis 10 ist eine zweite Ausführungsform der Stromerzeugungsvorrichtung dargestellt. Dem Grunde nach ist diese zweite Vorrichtung 201 ähnlich aufgebaut und funktioniert nach ähnlichen Prinzipien wie die zuvor beschriebene Vorrichtung 101. Im Detail unterscheiden sich die beiden Vorrichtungen jedoch, wie nachfolgend erläutert.

Auch die Vorrichtung 201 umfaßt einen elektrischen Drehgenerator 202 mit einer Generatorwelle 203, sowie weiter eine Rotationseinrichtung 204 zum Antreiben der Generatorwelle 203, wobei die Rotationseinrichtung 204 eine Antriebswelle 205 und ein Antriebselement 206 aufweist. Als Antriebselement 206 dient dabei ein die Antriebswelle 205 lagernder Mitnehmer. Der die Antriebswelle 205 wie eine Art Hülse umgreifende Mitnehmer 206 ist dabei, wie nachfolgend noch genauer erläutert, als Pendellager ausgeführt.

Die Antriebswelle 205 steht erneut sowohl mit der Generatorwelle 203 des Drehgenerators 202 als auch mit dem Mitnehmer 206 in Wirkverbindung zur Übertragung von Drehbewegungen. Hierzu ist die Antriebswelle 205 mit ihrem einen Ende mit der Generatorwelle 203 drehfest verbunden.

Die Rotationseinrichtung 204 umfaßt erneut eine Unwuchtmasse 208, die wie zuvor an einem mit der Antriebswelle 205 fest verbundenen Hebelarm 209 angebracht ist.

Die Pendelbewegung 212, die Teile der Rotationseinrichtung 204, insbesondere die Antriebswelle 205, wie im Fall des ersten Ausführungsbeispiels vollführt, ohne die Wirkverbindung zu der Generatorwelle 203 und zu dem Mitnehmer 206 zu verlieren, ist in diesem Fall nicht linear. Statt dessen verläuft die Pendelbewegung auf einer von der Linearform abweichenden Bahn, insbesondere einer elliptisch bis kreisförmig, wie nachfolgend noch genauer beschrieben.

Im Betrieb kommt es zu selben Eigendynamik der Antriebswelle 2C5 und damit der Rotationseinrichtung 204 wie zuvor. Nach der Bereitstellung eines initialen Antriebsimpulses über den Mitnehmer 206 erfolgt eine Drehung 214 der Rotationseinrichtung 204 ohne äußere Energiezufuhr, verursacht allein durch Schwer- und Fliehkräfte, um mindestens eine halbe Umdrehung. Je schneller sich die Antriebswelle 205 dreht, um so mehr Eigendynamik entwickelt das System und um so weniger Druckluft wird benötigt, um einen dauerhaften Betrieb mit der gewünschten Arbeitsdrehzahl aufrecht zu erhalten.

Es sind in dieser Ausführungsform lediglich zwei Lager vorgesehen, nämlich das feststehende Lager 216 an dem "Festende" der Antriebswelle 205 sowie der als Antriebselement dienende Mitnehmer in Gestalt des Pendellagers 206 an dem pendelnden "Freiende" der Antriebswelle 205. Die Antriebsprimärwelle 107 sowie das obere Lager 117 entfallen, da die Drehbewegung der Antriebswelle 205 nicht mehr ursächlich auf die Rotation der Schwungmasse 106, sondern nun auf die Bewegung der Unwuchtmasse 208 zurückzuführen ist.

Zur Beaufschlagung des Antriebselements 206, welches diesmal lediglich zur Unterstützung der Pendelbewegung genutzt wird, dienen zwei druckluftbetriebene Pneumatikzylinder 222. Eine Kontrolleinheit 223 steuert die Druckluftzufuhr der Pneumatikzylinder 222 in Abhängigkeit von der Position der Unwuchtmassse 208. Wie zuvor erfolgt eine Beaufschlagung mit einem entsprechend dosiertem Antriebsmoment, wenn die durch die Unwucht hervorgerufene Drehbewegung sich ihrem "Totpunkt" oder "Nullpunkt" nähert. Es wird zyklisch Energie zugeführt, um eine möglichst konstante Drehzahl des Mitnehmers 206 und damit des Wellenstrangs, einschließlich der Generatorwelle 203 des Drehgenerators 202 zu gewährleisten.

Die Pneumatikzylinder 222, bei denen es sich in dem hier beschriebenen Beispiel um einfachwirkende Zylinder handelt, weisen die üblichen Elemente auf. Die linear verfahrbaren Kolbenstangen 226 der beiden Zylinder 222 sind mit ihren freien Enden gelenkig an sich gegenüberliegenden Stellen der Außenseite des Mitnehmers 206 befestigt. Die Kolbenstangen 226 liegen dabei auf einer gemeinsamen Linie, welche die Hubrichtung und damit zugleich die Arbeitsrichtung der Pneumatikzylinder 222 definiert. Die Zylinder 222 unterstützen die Pendelbewegung in Linearrichtung, nämlich in der Hauptrichtung 210 der Pendelbewegung, die als eine gedachte Gerade zwischen den Pendelstellungen 219, 220 liegt.

Die Steuerung der Ventile 225 der Zylinder 222 erfolgt in Abhängigkeit von der Position der Unwuchtmasse 208 und somit in Abhängigkeit von der Drehstellung der Antriebswelle 205. Da das Kippen der Antriebswelle 205 und damit ein Stellungswechsel jede halbe Umdrehung stattfindet, erfolgt in dem hier skizzierten Beispiel mit zwei Pneumatikzylindern 222 eine Beaufschlagung des Mitnehmers 206 ebenfalls jede halbe Umdrehung. Dabei werden die Zylinder 222 jeweils abwechselnd angesteuert, so daß der Mitnehmer 206 und damit das Freiende der Antriebswelle 205 in jeweils zwei definierten Pendelstellungen während einer Pendelbewegung mit einem linearen Antriebsimpuls beaufschlagt wird, des jeweils in die entgegengesetzte Richtung gerichtet ist. Der Mitnehmer 206 übernimmt mit anderen Worten eine ähnliche Funktion wie der in dem ersten Ausführungsbeispiel beschriebene Schieber 133, während die dort für die Drehung der Antriebswelle 105 hauptsächlich verantwortliche Schwungscheibe 106 jetzt nicht mehr benötigt wird.

Die Rotationseinrichtung 204 ist wie zuvor nach Art eines inversen Pendels ausgeführt, bei dem der obere Teil des Wellenstrangs, einschließlich des "Freiendes" der Antriebswelle 205 in einer Pendelhauptrichtung 210 beweglich ist. Während einer Drehung um die zentrale Drehachse der Vorrichtung 201 kippt somit die Antriebswelle 205 und der Mitnehmer 206, von einer Pendelstellung 219 in die andere Pendelstellung 220. Dabei vollführt das "Freiende" der Antriebswelle 205 mit dem Mitnehmer 206 keine Linearbewegung, sondern eine elliptische bis kreisförmige Bewegung.

Die Antriebswelle 205 ist dabei an ihrem oberen, freien "Pendelende" über das Pendellager 206 in einer elliptischen Führung 229 der Vorrichtung 201 geführt. Zu diesem Zweck verfügt das Pendellager 206, welches vorzugsweise als Kugellager mit zwei Kugelreihen ausgeführt ist, neben einem aus der Mittelstellung nach allen Richtungen herausschwenkbaren Innenring 215 zur pendelnden Lagerung der Antriebswelle 205 (damit diese während des Betriebs die Wirkverbindung zu dem Mitnehmer 206 nicht verliert) auch einen festen Außenring 217 zur Lagerung des Mitnehmers 206 in der Führung 229, genauer gesagt an dem Öffnungsrand 228 der Führungsöffnung 229. Die Führung 229 dient dazu, den Mitnehmer 206 in Richtung der jeweils angestrebten Pendelstellung 219, 220 zu führen, mit anderen Worten das dem Mitnehmer 206 von einem der beiden Pneumatikzylinder 222 aufgeprägte Bewegungsmoment in die gewünschte Richtung zu leiten.

Die Führung 229 wird auch hier durch eine symmetrische Öffnung in einer Führungsplatte 231 gebildet, die ein Teil des Trägerrahmens der Vorrichtung 201 ist. Die Hauptachse 227 der elliptischen Öffnung 229 liegt in der Pendelhauptrichtung 210 und ist außerdem deckungsgleich mit der Arbeitsrichtung der Pneumatikzylinder 222.

Zur weiteren Unterstützung des Stellungswechsels der Antriebswelle 205 von der ersten Pendelstellung 219 in die zweite Pendelstellung 220 dienen zwei Federelemente 233. Bei jedem der Federelemente 233 kann es sich um eine einzelne Feder oder um eine Mehrzahl von Federn bzw. um ein Federpaket handeln. Die Federelemente 233 sind mit ihren einen Enden ortsfest an dem Trägerrahmen der Vorrichtung 201 und mit ihren anderen Enden gelenkig an sich gegenüberliegenden Stellen der Außenseite des Mitnehmers 206 befestigt. Dabei sind die Federelemente 233, bei denen es sich vorzugsweise um Schraubenzugfedern handelt, derart angeordnet, daß ihre Federachsen im nicht ausgelenkten Ruhezustand in der Richtung der Nebenachsen 232 der elliptischen Öffnung 229 liegen, also quer zu der Pendelhauptrichtung 210 bzw. senkrecht zu der Arbeitsrichtung der Zylinder 222. Während der Pendelbewegung der Abtriebsachse 205 bewirken die Federelemente 233 eine Federkraft auf die Antriebswelle 205 in Richtung der Pendelbewegung. Genauer gesagt unterstützen die Federelemente 233 die von der Linearrichtung abweichende Pendelbewegung, nämlich den quer zu der Hauptrichtung 210 der Pendelbewegung stattfindenden Pendelbewegungsanteil. Damit stellen die Federelemente 233 unter anderem sicher, daß der Mitnehmer 206 gegen den Öffnungsrand 228 der Führungsöffnung 229 gezogen wird, dort anliegt und an diesem entlang geführt wird.

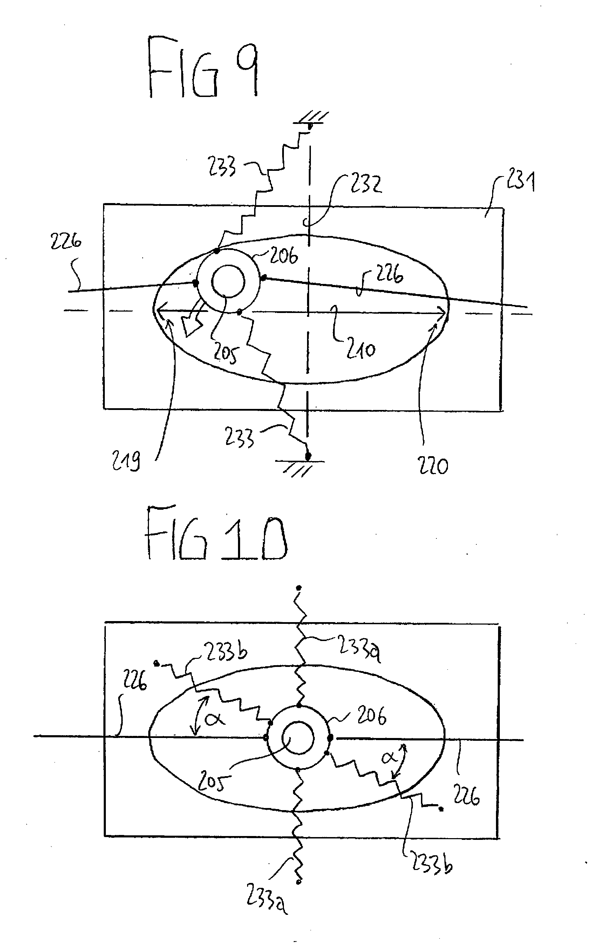

In einer bevorzugten Ausführungsform der Erfindung, wie beispielhaft in Fig. 10 skizziert, sind nicht zwei, sondern vier Federelemente 233 vorgesehen. Dabei ist das erste sich gegenüberliegend angeordnete Federelementpaar 233a erneut so angeordnet, daß die Wirkrichtung der Federelemente (hier die Federlängsrichtung) genau senkrecht zu der Hauptrichtung 210 liegt, die Federelemente also in der Querstellung (90°-Stellung) montiert sind. Das zweite sich ebenfalls gegenüberliegend angeordneten Federelementpaar 233b ist so angeordnet, daß die Wirkrichtung der Federelemente in einem Winkel alpha zur Hauptrichtung 210 der Pendelbewegung liegt, der größer als 0° und kleiner als 90° ist. Es ergibt sich damit eine zusätzliche, in der Hauptrichtung 210 wirkende Federkraftkomponente, die denjenigen Pendelbewegungsanteil unterstützt, der in der Hauptrichtung 210 der Pendelbewegung stattfindet. Der Wert des Winkels alpha beträgt vorteilhafterweise zwischen 0° und 45°, besonders vorteilhaft sind Winkel zwischen 5° und 25°, ganz besonders vorteilhaft zwischen 10° und 20°. Auch in diesen Fällen ist die Anordnung der Federelemente symmetrisch zueinander, insbesondere liegen die Federelemente eines Federelementpaares auf identischen Wirklinien. Die genaue Positionierung der Federelemente ist von der gewünschten Arbeitsdrehzahl und dem Gewicht der Unwuchtmasse 208 abhängig und wird vorzugsweise einmalig bei der Installation der Vorrichtung 201 eingestellt.

Als ganz besonders vorteilhaft hat sich in diesem Zusammenhang erwiesen, wenn sich die auf das Antriebselement 206 wirkende Federkraft verändern läßt. Dies erfolgt durch eine Änderung der Vorspannung und/oder eine Änderung der Federrate der Federelemente 233. Vorzugsweise wird eine Änderung der Vorspannung vorgenommen, indem die einen Enden nicht ortsfest, sondern ortsveränderlich an dem Trägerrahmen der Vorrichtung 201 befestigt sind. Dann kann durch eine Änderung des Abstandes der Federenden die gewünschte Federkraftänderung hervorgerufen werden. Die Einstellung der Federkraft findet vorzugsweise dynamisch, d.h. während des Betriebs der Vorrichtung 201 statt, vorzugsweise in Abhängigkeit von der Drehzahl der Antriebswelle 205 und/oder in Abhängigkeit von der Länge des Hebelarms 209 und/oder in Abhängigkeit von dem Gewicht der Unwuchtmasse 208. Die Änderung des Abstandes zwischen den Federenden erfolgt vorzugsweise mit Hilfe eines motorischen Antriebs, angesteuert von einer geeigneten Kontrolleinheit (beides nicht dargestellt).

Der Stellungswechsel, also das Hin- und Her-Kippen der Antriebswelle 205 zwischen ihren Pendelstellungen 219, 220 bzw. das Vollführen der elliptischen Bewegung wird mit Hilfe der pneumatisch angetriebenen Zylinder 222 sowie mit Hilfe der Federelemente 233 auf eine Art und Weise unterstützt, daß sich die Rotationseinrichtung 204 über den Kipp-Punkt der Antriebswelle 205 besonders einfach hinwegbewegt. In beiden beschriebenen Ausführungsbeispielen ist eine große Länge der Antriebsachse 105, 205 für eine besonders wirkungsvolle Pendelbewegung bevorzugt.

Die Vorrichtung 101, 102 zur Erzeugung von elektrischem Strom umfaßt einen elektrischen Drehgenerator 102, 202, der eine Generatorwelle 103 aufweist, und eine Rotationseinrichtung 104, 204 zum Antreiben der Generatorwelle 103, 203, welche Rotationseinrichtung 104, 204 wenigstens ein Antriebselement 106, 206 aufweist, wobei die Rotationseinrichtung 104, 204 mit der Generatorwelle 103, 203 in Wirkverbindung steht, und ist gekennzeichnet durch eine an einem Druckluftspeicher 3, 4 anschließbare Druckluftzuführung 25, wobei die Rotationseinrichtung 104, 204 auch mit der Druckluftzuführung 25 in Wirkverbindung steht, und wobei das wenigstens eine Antriebselement 106, 206 der Rotationseinrichtung 104, 204 mittels aus dem Druckluftspeicher 3, 4 entnehmbarer Druckluft mit einem Antriebsmoment beaufschlagbar ist.

Vorzugsweise weist die Rotationseinrichtung 104, 204 eine Antriebswelle 105, 205 auf, welche Antriebswelle 105, 205 sowohl mit der Generatorwelle 103, 203 des Drehgenerators 102, 202 als auch mit dem Antriebselement 106, 206 in Wirkverbindung steht.

Vorzugsweise umfaßt die Vorrichtung 101,201 einen druckluftbetriebenen Antrieb 122, 222 zum Antreiben des Antriebselements 106, 206.

Vorzugsweise ist der Antrieb ein Schubgestänge 122 und das Antriebselement 106 eine Schwungmasse. In einer anderen Ausführungsform ist der Antrieb ein Pneumatikzylinder 222 und das Antriebselement ein die Antriebswelle 205 lagernder Mitnehmer 206 ist.

Vorzugsweise weist die Rotationseinrichtung 104, 204 eine Unwuchtmasse 108, 208 auf.

Vorzugsweise ist die Unwuchtmasse 108, 208 an einem mit der Antriebswelle 105, 205 verbundenen Hebelarm 109, 209 angebracht.

Vorzugsweise ist die Rotationseinrichtung 104, 204 derart ausgebildet, daß die Antriebswelle 105, 205 eine von der Unwuchtmasse 108, 208 hervorgerufene Pendelbewegung vollführen kann, ohne die Wirkverbindung zu der Generatorwelle 103, 203 und zu dem Antriebselement 106, 206 zu verlieren.

Vorzugsweise umfaßt die Vorrichtung 101 ein Betätigungselement 133, ausgebildet zur Unterstützung eines linearen Stellungswechsels der Antriebswelle 104 von einer ersten Pendelstellung 119 in eine zweite Pendelstellung 120 durch Übertragen eines Impulses auf die Antriebswelle 105. In einer anderen Ausführungsform umfaßt die Vorrichtung 201 eine Anzahl Federelemente 233, ausgebildet zur Unterstützung eines Stellungswechsels der Antriebswelle 204 von einer ersten Pendelstellung 219 in eine zweite Pendelstellung 220.

Das Verfahren zur Erzeugung von elektrischem Strom, bei dem eine wenigstens ein Antriebselement 106, 206 aufweisende Rotationseinrichtung 104, 204 mit einer anzutreibenden Generatorwelle 103, 203 eines elektrischen Drehgenerators 102, 202 in Wirkverbindung steht, ist dadurch gekennzeichnet, daß die Rotationseinrichtung 104, 204 auch mit einer an einem Druckluftspeicher 3, 4 angeschlossenen Druckluftzuführung 25 in Wirkverbindung steht und das wenigstens eine Antriebselement 106, 206 der Rotationseinrichtung 104, 204 mittels aus dem Druckluftspeicher 3, 4 entnommener Druckluft mit einem Antriebsmoment beaufschlagt wird.

Vorzugsweise erfolgt die Beaufschlagung des wenigstens einen Antriebselements 106, 206 der Rotationseinrichtung 104, 204 mit Druckluft in zeitlichen Abständen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Vorrichtung zur Bereitstellung von Druckluft
- 2: Arbeitskammer
- 3: erste Speicherkammer
- 4: zweite Speicherkammer
- 5: Erdoberfläche
- 6: Rohr
- 7: Fallhöhe
- 8: Längsachse
- 9: Kolben
- 10: Ausgangsstellung
- 11: Längsrichtung
- 12: Kammerwand
- 13: Dichtungsmanschette
- 14: Oberes Kammerende
- 15: Arretierungseinrichtung
- 16: Kammerboden
- 17: Verbindungsleitung
- 18: Rückhubeinrichtung
- 19: Anschlußleitung
- 20: (frei)
- 21: Ventil
- 22: Einlaß
23 Auslaß
24 Durchlaßöffnung
25 Druckluftzuführung

- 101: Vorrichtung zur Erzeugung von elektrischem Strom
- 102: Drehgenerator
- 103: Generatorwelle
- 104: Rotationseinrichtung
- 105: Antriebswelle
- 106: Antriebselement (Schwungscheibe)
- 107: Antriebsprimärwelle
- 108: Unwuchtmasse
- 109: Hebelarm
- 110: (frei)
- 111: Drehachse
- 112: Pendelbewegung
- 113: Senkrechte
- 114: Drehung
- 115: (frei)
- 116: Lager der Generatorwelle
- 117: Lager der Antriebsprimärwelle
- 118: Verbindungselement
- 119: erste Pendelstellung
- 120: zweite Pendelstellung
- 121: Schalter
- 122: Schubgestänge
- 123: Kontrolleinheit
- 124: Totpunkt
- 125: Ventil
- 126: Kolben
- 127: Pleuel
- 128: Kurbelstange
- 129: Langloch

- 130: druckluftbeaufschlagte Drehung
- 131: Führungsplatte
- 132: Grundplatte
- 133: Schieber
- 134: Führungsmittel
- 135: erste Lagerposition
- 136: zweite Lagerposition

- 201: Vorrichtung zur Erzeugung von elektrischem Strom
- 202: Drehgenerator
- 203: Generatorwelle
- 204: Rotationseinrichtung
- 205: Antriebswelle
- 206: Antriebselement, Mitnehmer (Pendellager)
- 207: (frei)
- 208: Unwuchtnasse
- 209: Hebelarm
- 210: Hauptrichtung
- 211: (frei)
- 212: Pendelbewegung
- 213: Senkrechte
- 214: Drehung
- 215: Innenring
- 216: Lager der Generatorwelle
- 217: Außenring
- 218: Verbindungselement
- 219: erste Pendelstellung
- 220: zweite Pendelstellung
- 221: Schalter
- 222: Pneumatikzylinder
- 223: Kontrolleinheit
- 224: (frei)
- 225: Ventil
- 226: Kolbenstange
- 227: Hauptachse
- 228: Öffnungsrand
- 229: elliptische Führungsöffnung
- 230: druckluftbeaufschlagte Drehung
- 231: Führungsplatte
- 232: Nebenachse
- 233: Federelement

## Patentansprüche

1. Vorrichtung (1) zum Bereitstellen von Druckluft, mit wenigstens zwei Kammern (2, 3, 4) konstanten Querschnitts, deren Längsachsen (8) senkrecht verlaufen und die miteinander in luftdichter Verbindung stehen, in welchen Kammern (2, 3, 4) Kolben (9) in Längsrichtung (11) verfahrbar angebracht sind, welche Kolben (9) gegen die Kammerwände (12) abdichten, wobei es sich bei einer ersten Kammer (2) um eine Pump- oder Arbeitskammer handelt, in welcher durch ein Einschieben des in dieser Kammer (2) angeordneten Kolbens (9a) ausgehend von einer Ausgangsstellung (10) des Kolbens (9a) Luft verdichtbar und über eine Verbindungsleitung (17) in eine zweite Kammer (3, 4) übertragbar ist, welche zweite Kammer (3, 4) als Speicherkammer dient, wobei der Kolben (9a) ausschließlich aufgrund seiner Gewichtskraft in die erste Kammer (2) einschiebbar ist.

2. Vorrichtung (1) nach Anspruch 1, wobei durch ein Einschieben des in der zweiten Kammer (3, 4) angeordneten Kolbens (9b, 9c) in die zweite Kammer (3, 4) ausgehend von einer Ausgangsstellung (10) des Kolbens (9b, 9c) Druckluft einem Verbraucher bereitstellbar ist, wobei der Kolben (9b, 9c) im wesentlichen ausschließlich aufgrund seiner Gewichtskraft in die zweite Kammer (3, 4) einschiebbar ist.

3. Vorrichtung (1) nach Anspruch 1 oder 2, wobei die Kolben (9) in ihren Kammern (2, 3, 4) in einer Ausgangsstellung (10) arretierbar sind, ausgehend von welcher Ausgangsstellung (10) sie bei einem Lösen der Arretierung in ihre Kammer (2, 3, 4) einschiebbar sind.

4. Vorrichtung (1) nach einem der Ansprüche 1 bis 3, mit einer Rückhubeinrichtung (18) zum Zurückbewegen der Kolben (9) von ihren eingeschobenen Stellungen in ihre Ausgangsstellungen (10).

5. Vorrichtung (1) nach einem der Ansprüche 1 bis 4, wobei die Kammern (2, 3, 4) im wesentlichen vollständig im Erdinneren angeordnet sind.

6. Verfahren zum Bereitstellen von Druckluft, bei dem durch ein Einschieben eines Kolbens (9a) in eine erste, als Pump- oder Arbeitskammer dienende Kammer (2) Luft verdichtet und über eine Verbindungsleitung (17) in eine zweite, als Speicherkammer dienende Kammer (3, 4) übertragen wird, wobei das Einschieben des Kolbens (9a) in die erste Kammer (2) ausschließlich aufgrund der Gewichtskraft des Kolbens (9a) erfolgt.

7. Verfahren nach Anspruch 6, bei dem Druckluft aus der zweiten Kammer (3, 4) einem Verbraucher bereitgestellt wird, indem der Kolben (9b, 9c) der zweiten Kammer (3, 4) in die zweite Kammer (3, 4) eingeschoben wird, wobei das Einschieben des Kolbens (9b, 9c) in die zweite Kammer (3, 4) im wesentlichen ausschließlich aufgrund der Gewichtskraft des Kolbens (9b, 9c) erfolgt.

8. Verfahren nach Anspruch 6 oder 7, wobei das Einschieben der Kolben (9) in ihre Kammern (2, 3, 4) erfolgt, indem eine Arretierung der Kolben (9) gelöst wird und sich die Kolben (9) aus einer Ausgangsstellung (10) heraus in Richtung des Kammerbodens (16) bewegen.

9. Verfahren nach einem der Ansprüche 6 bis 8, bei dem nach einem Einschieben des Kolbens (9a) in die erste Kammer (2) dieser Kolben (9a) vorzugsweise unter Verwendung elektrischer Energie in seine Ausgangsstellung zurückbewegt wird.

10. Verfahren nach Anspruch 9, wobei während der Rückbewegung des Kolbens (9a) in seine Ausgangsstellung (10) eine Rückströmung verdichteter Luft aus der zweiten Kammer (3, 4) in die erste Kammer (2) durch ein Ventil (21) verhindert wird.

## Claims

1. Device (1) for providing compressed air, having at least two chambers (2, 3, 4) of constant cross section, the longitudinal axes (8) of which extend vertically and which are connected to one another in an air-tight manner, in which chambers (2, 3, 4) pistons (9) are provided so as to be movable in the longitudinal direction (11), which pistons (9) seal off with respect to the chamber walls (12), wherein a first chamber (2) is a pump chamber or working chamber in which, by insertion of the piston (9a), arranged in this chamber (2), starting from an initial position (10) of the piston (9a), air is able to be compressed and is able to be transferred via a connecting line (17) into a second chamber (3, 4), which second chamber (3, 4) serves as a storage chamber, wherein the piston (9a) is able to be inserted into the first chamber (2) exclusively on account of its weight.

2. Device (1) according to Claim 1, wherein it is possible to provide compressed air to a consumer by insertion of the piston (9b, 9c), arranged in the second chamber (3, 4), into the second chamber (3, 4) starting from an initial position (10) of the piston (9b, 9c), wherein the piston (9b, 9c) is able to be inserted into the second chamber (3, 4) substantially exclusively on account of its weight.

3. Device (1) according to Claim 1 or 2, wherein the pistons (9) are able to be locked in their chambers (2, 3, 4) in an initial position (10), starting from which initial position (10) said pistons are able to be inserted into their chamber (2, 3, 4) when the locking action is released.

4. Device (1) according to one of Claims 1 to 3, having a return-stroke device (18) for moving the pistons (9) from their inserted positions back into their initial positions (10).

5. Device (1) according to one of Claims 1 to 4, wherein the chambers (2, 3, 4) are arranged substantially entirely in the interior of the earth.

6. Method for providing compressed air, in which, by insertion of a piston (9a) into a first chamber (2) serving as a pump chamber or working chamber, air is compressed and is transferred via a connecting line (17) into a second chamber (3, 4) serving as a storage chamber (3, 4), wherein the insertion of the piston (9a) into the first chamber (2) occurs exclusively on account of the weight of the piston (9a).

7. Method according to Claim 6, in which compressed air is provided to a consumer from the second chamber (3, 4) in that the piston (9b, 9c) of the second chamber (3, 4) is inserted into the second chamber (3, 4), wherein the insertion of the piston (9b, 9c) into the second chamber (3, 4) occurs substantially exclusively on account of the weight of the piston (9b, 9c).

8. Method according to Claim 6 or 7, wherein the insertion of the pistons (9) into their chambers (2, 3, 4) occurs in that a locking action of the pistons (9) is released and the pistons (9) move from an initial position (10) in the direction of the chamber base (16).

9. Method according to one of Claims 6 to 8, in which, after insertion of the piston (9a) into the first chamber (2), said piston (9a) is moved back into its initial position preferably through the use of electrical energy.

10. Method according to Claim 9, wherein, during the return movement of the piston (9a) into its initial position (10), a back flow of compressed air from the second chamber (3, 4) into the first chamber (2) is prevented by way of a valve (21).

## Revendications

1. Dispositif (1) de fourniture d'air comprimé, comprenant au moins deux chambres (2, 3, 4) de section transversale constante, dont les axes longitudinaux (8) s'étendent perpendiculairement et qui sont en liaison étanche à l'air l'une avec l'autre, dans lesquelles chambres (2, 3, 4) des pistons (9) sont montés de manière déplaçable dans la direction longitudinale (11), lesquels pistons (9) réalisent l'étanchéité contre les parois de la chambre (12), une première chambre (2) étant une chambre de pompage ou une chambre de travail dans laquelle de l'air peut être comprimé par insertion du piston (9a) disposé dans cette chambre (2) à partir d'une position de départ (10) du piston (9a) et peut être transféré dans une deuxième chambre (3, 4) par le biais d'une conduite de liaison (17), laquelle deuxième chambre (3, 4) sert de chambre d'accumulation, le piston (9a) pouvant être inséré dans la première chambre (2) exclusivement en raison de son propre poids.

2. Dispositif (1) selon la revendication 1, dans lequel de l'air comprimé peut être fourni à un consommateur par insertion dans la deuxième chambre (3, 4) du piston (9b, 9c) disposé dans la deuxième chambre (3, 4) à partir d'une position de départ (10) du piston (9b, 9c), le piston (9b, 9c) pouvant être inséré dans la deuxième chambre (3, 4) exclusivement en raison de son propre poids.

3. Dispositif (1) selon la revendication 1 ou 2, dans lequel les pistons (9) peuvent être bloqués dans leur chambre (2, 3, 4) dans une position de départ (10), à partir de laquelle position de départ (10) ils peuvent être insérés dans leur chambre (2, 3, 4) lors d'un desserrage du blocage.

4. Dispositif (1) selon l'une quelconque des revendications 1 à 3, comprenant un dispositif de course de retour (18) pour ramener les pistons (9) de leurs positions enfoncées dans leurs positions de départ (10).

5. Dispositif (1) selon l'une quelconque des revendications 1 à 4, dans lequel les chambres (2, 3, 4) sont disposées essentiellement complètement dans la terre.

6. Procédé pour fournir de l'air comprimé, dans lequel de l'air est comprimé par insertion d'un piston (9a) dans une première chambre (2) servant de chambre de pompe ou de chambre de travail et est transmis par le biais d'une conduite de liaison (17) dans une deuxième chambre (3, 4) servant de chambre d'accumulation, l'insertion du piston (9a) dans la première chambre (2) s'effectuant exclusivement en raison du poids propre du piston (9a).

7. Procédé selon la revendication 6, dans lequel l'air comprimé sortant de la deuxième chambre (3, 4) est fourni à un consommateur, par le fait que le piston (9b, 9c) de la deuxième chambre (3, 4) est inséré dans la deuxième chambre (3, 4), l'insertion du piston (9b, 9c) dans la deuxième chambre (3, 4) s'effectuant essentiellement exclusivement en raison du poids propre du piston (9b, 9c).

8. Procédé selon la revendication 6 ou 7, dans lequel l'insertion des pistons (9) dans leurs chambres (2, 3, 4) s'effectue par le fait qu'un blocage du piston (9) est libéré et que les pistons (9) se déplacent à partir d'une position de départ (10) dans la direction du fond de la chambre (16).

9. Procédé selon l'une quelconque des revendications 6 à 8, dans lequel, après l'insertion du piston (9a) dans la première chambre (2), ce piston (9a) est ramené en arrière dans sa position de départ en utilisant de l'énergie électrique.

10. Procédé selon la revendication 9, dans lequel, pendant le mouvement de retour du piston (9a) dans sa position de départ (10), un écoulement de retour d'air comprimé depuis la deuxième chambre (3, 4) dans la première chambre (2) est empêché par une soupape (21).
